**Europäisches Patentamt**

**European Patent Office**

**Office européen des brevets**

(11) Veröffentlichungsnummer: **0 206 190**
**B1**

(12) **EUROPÄISCHE PATENTSCHRIFT**

(45) Veröffentlichungstag der Patentschrift:
25.01.89

(21) Anmeldenummer: **86108172.7**

(22) Anmeldetag: **14.06.86**

(51) Int. Cl.⁴: **F 16 B 31/04,** F 16 B 33/00,
F 16 B 35/04

(54) Verbindungselement für zwei Maschinen- oder Bauteile.

(30) Priorität: **18.06.85 DE 3521755**

(43) Veröffentlichungstag der Anmeldung:
**30.12.86 Patentblatt 86/52**

(45) Bekanntmachung des Hinweises auf die Patenterteilung:
**25.01.89 Patentblatt 89/4**

(84) Benannte Vertragsstaaten:
**AT FR GB IT NL SE**

(56) Entgegenhaltungen:
**DE-A-2 143 784**
**DE-A-2 233 560**
**DE-U-8 325 206**
**US-A-4 040 327**
**US-A-4 338 054**

(73) Patentinhaber: **Kamax- Werke Rudolf Kellermann GmbH & Co. KG, Petershütter Allee 29, D-3360 Osterode am Harz (DE)**

(72) Erfinder: **Jende, Siegfried, Dipl.- Ing., Petershütter Allee 1, D-3360 Osterode (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

**Beschreibung**

Die Erfindung bezieht sich auf ein Verbindungselement für zwei Maschinen- oder Bauteile, insbesondere Paß-Dehnschraube, Paß-Gewindebolzen oder dergleichen, mit einem der Befestigung dienenden Gewindeabschnitt und einem dazu axial versetzt angeordneten Dehnabschnitt aus mehreren Wulsten und Rillen, wobei der Kerndurchmesser der Rillen des Dehnabschnittes kleiner als der Kerndurchmesser des Gewindeabschnittes ausgebildet ist. Als Paß-Dehnschraube kann das Verbindungselement mit einem Kopf versehen sein. Als Paß-Gewindebolzen ist zweckmäßig ein Festschraubgewinde zusätzlich vorgesehen.

Ein Verbindungselement der eingangs beschriebenen Art ist aus der DE-A-2 143 784 bekannt. Der Dehnabschnitt ist dabei ebenfalls als Gewinde ausgebildet, welches zunächst mit einem größeren Außendurchmesser als dem Außendurchmesser des Gewindeabschnittes hergestellt wird. Dieser Außendurchmesser des Dehnschaftes wird jedoch auf Paßmaß abgearbeitet. Die Herstellung dieses Verbindungselementes erfolgt durch Gewindewalzen oder Gewinderollen, also durch Kaltumformung, wobei der Faserverlauf des Materials nicht gestört wird. Der Kerndurchmesser der Rillen im Dehnabschnitt kann zwischen 2 und 10 % kleiner als der Kerndurchmesser des Befestigungsgewindes des Gewindeabschnittes sein. Dieses bekannte Verbindungselement besitzt eine große elastische Dehnung, so daß die Elastizität des Dehnabschnittes gegenüber dem Gewindeabschnitt vergrößert ist. Bei zügiger Beanspruchung wird bei dem bekannten Bolzen ein etwaiger Bruch im Betrieb in aller Regel im Befestigungsgewinde auftreten. Über die Gestaltung des Flankendurchmesser im Dehnabschnitt und über die Gestaltung des Spannungsquerschnittes im Dehnabschnitt enthält diese Druckschrift keine Hinweise.

Aus der DE-A-2 233 560 ist ein axial- und biegebeanspruchtes Verbindungselement bekannt, welches ebenfalls einen Dehn- und einen Gewindeabschnitt zur Befestigung aufweist. Der Kerndurchmesser der Rillen des Dehnabschnittes richtet sich dabei nach den Materialeigenschaften und der erforderlichen elastischen Länge unter Einwirkung der Axialkraft. Auch dieses Verbindungselement wird durch einen Roll- und Walzvorgang hergestellt. Die Rill- und Wulstvolumina in dem Dehnabschnitt sind gleich. Der Außendurchmesser der Wulste entspricht dem durch das Konstruktionsmaß bedingten Wert. Die Formgebung der Rundungen der Rillen im Dehnabschnitt sind größer oder gleich den Rundungen des Befestigungsgewindes im Gewindeabschnitt. Auch hier werden über die Bemessung des Flankendurchmessers des Dehnabschnittes aus Wulsten und Rillen keine Angaben gemacht.

Aus dem DBGM 83 25 206.1 ist ein Verbindungselement bekannt, bei dem der Kerndurchmesser der Rillen des Dehnabschnittes dem Kerndurchmesser des Befestigungsgewindes im Gewindeabschnitt entspricht. Die beiden Kerndurchmesser sind damit gleich, so daß die Nachgiebigkeit im Bereich des Dehnabschnittes nicht größer sein kann als die Nachgiebigkeit im Gewindeabschnitt. Der Außendurchmesser der Wulste im Dehnabschnitt kann größer sein als der Außendurchmesser des Befestigungsgewindes des Gewindeabschnittes. Eine Verbesserung der Eigenschaften durch eine solche Gestaltung ist daher nur sehr bedingt zu erwarten.

Der Erfindung liegt die Aufgabe zugrunde, ein Verbindungselement der eingangs beschriebenen Art derart weiterzubilden, daß bei gutem elastischem Dehnverhalten und damit einer guten dynamischen Dauerhaltbarkeit eine höhere zulässige Belastbarkeit bei Zugbeanspruchung erreicht wird.

Erfindungsgemäß wird dies dadurch erreicht, daß der Kerndurchmesser der Rillen des Dehnabschnittes zwischen 80 % und kleiner 1 des Kerndurchmessers des Gewindeabschnittes beträgt und daß der Flankendurchmesser des Dehnabschnittes aus den Wulsten und Rillen größer oder gleich dem Flankendurchmesser des Gewindeabschnittes ausgebildet ist. Die Erfindung geht von dem Gedanken aus, die elastische Nachgiebigkeit des Dehnabschnittes größer zu gestalten als die elastische Nachgiebigkeit des Gewindeabschnittes, und zwar zur Erhöhung der Dauerfestigkeit des gesamten Verbindungselementes und andererseits den Flankendurchmesser des Dehnabschnittes hinreichend groß im Vergleich zu dem Flankendurchmesser des Gewindeabschnitts zu wählen, so daß die Erhöhung der statischen Belastbarkeit möglich wird. Der von dem Verbindungselement zur Verfügung gestellte Querschnitt zur Aufnahme der einwirkenden Kräfte muß im Bereich des Dehnabschnitts gleich oder größer sein als im Bereich des Gewindeabschnittes. Der Flankendurchmesser des Dehnabschnittes ist entsprechend dem Kerndurchmesser des Dehnabschnittes, der Teilung bzw. Steigung der Wulste und dem Flankenwinkel entsprechend der Formel festgelegt. Der Kerndurchmesser der Rillen des Dehnabschnittes wird entsprechend der Formel

$$d_{2R} = d_{3R} + \frac{2}{3} \cdot \frac{P*}{2 \tan \frac{\alpha}{2}}$$

festgelegt. Der Kerndurchmesser der Rillen des Dehnabschnittes wird entsprechend der Formel

$$d_{3R} = 0.8 \ldots 0.999 \cdot D_3$$

festgelegt.

Die Schraubennachgiebigkeit $\vartheta_{SR}$ im Bereich der Rillen bestimmt sich aus dem Kerndurchmesser der Rillen entsprechend der Formel

$$\vartheta_{SR} = \frac{4}{\pi} \cdot \frac{1}{E \cdot D_{3R}{}^2},$$

wobei der Elastizitätsmodul E des Materials und die Länge L des Dehnabschnittes außer dem Kerndurchmesser $d_{3R}$ des Dehnabschnitts eingehen.

Nach Bestimmung der elastischen Nachgiebigkeit des Dehnabschnittes wird die Zugkraft im Dehnabschnitt über den Querschnitt der Rille bestimmt, wobei hier die Gleichung

$$F_{0,2\ min} = R_{p0,2\ min} \cdot A_{SR}$$

gilt.

Dabei bedeuten $F_{0,2\ min}$ die Schraubenkraft an der Mindeststreckgrenze, $R_{p0,2\ min}$ den Mindestwert der 0,2 %-Dehngrenze nach DIN ISO 898, Teil 1 sowie $A_{SR}$ den Spannungsquerschnitt im Dehnabschnitt. Dieser Spannungsquerschnitt $A_{SR}$ des Dehnabschnittes und der Spannungsquerschnitt $A_S$ des Gewindeabschnittes werden rechnerisch nach den folgenden Formeln bestimmt:

$$A_{SR} = 0,785 \cdot \left(\frac{d_{2R} + d_{3R}}{2}\right)^2$$

$$A_S = 0,785 \cdot \left(\frac{d_2 + D_3}{2}\right)^2.$$

Während der Flankendurchmesser $d_2$ und der Kerndurchmesser $d_3$ im Gewindeabschnitt aus entsprechenden Maßtabellen abzulesen sind, errechnet sich der Flankendurchmesser $d_{2R}$ nach der im Anspruch 2 angegebenen Formel. Man erkennt, daß bei einem vorgegebenen bzw. gewählten Kerndurchmesser $d_{3R}$ des Dehnabschnittes der Flankendurchmesser des Dehnabschnittes $d_{2R}$ sehr stark von dem Flankenwinkel $\alpha$ und der Teilung P* abhängig ist. Über die Veränderung des Flankendurchmessers und der Teilung im Dehnabschnitt läßt sich die zügige Beanspruchbarkeit des Bauteils bestimmen. Es ist sogar möglich, bei einem kleineren Kerndurchmesser des Dehnabschnittes als im Gewindeabschnitt dennoch eine höhere zügige Beanspruchbarkeit in dem Dehnabschnitt als im Gewindeabschnitt zu erhalten, und zwar bei zumindest gleicher oder größerer Schraubennachgiebigkeit $\vartheta_S$.

Der Außendurchmesser der Wulste des Dehnabschnittes kann größer als der Außendurchmesser des Gewinde-abschnittes ausgebildet sein, insbesondere in einem Bereich zwischen dem 1,0 bis 1,2 fachen des Außendurchmessers d des Gewindeabschnittes. Dieser Bereich kann durch die beiden folgenden Formeln angegeben werden:

$$d_{Rmin} \gneqq d_{2R}$$

$$d_{Rmax} \lneqq 1,2 \cdot d.$$

Damit ist es nicht mehr dem Zufall überlassen, ob ein Verbindungselement neben einer guten, zügigen Beanspruchbarkeit auch eine höhere elastische Nachgiebigkeit und damit eine höhere Dauerfestigkeit aufweist. Da Spannungskonzentrationen die zügige Haltbarkeit zäher Werkstoffe zwar nicht ungünstiger beeinflussen, in jedem Fall aber die Schwingungsfestigkeit des Bauteils herabsetzen, muß vor allem wegen einer guten Dauerhaltbarkeit das Verbindungselement so gestaltet werden, daß notwendige Querschnittsübergänge nicht zu schroff ausgeführt werden. Für die Gestaltung der Rundung der Rillen des Dehnabschnittes bedeutet dies, diese gleich oder größer als die Rundung der Rillen des Gewindeabschnitts zu wählen. Gleiches gilt für den Rillenein- und Rillenauslauf. Die Rundung $R_{RI}$ im Rillengrund sollte im Bereich von

$$R_{RI} \approx \frac{P^*}{6,9}$$

liegen.

Im Außendurchmesser können die Wulste mit einem geraden Kamm oder auch mit einem Rundungsradius $R_{RA}$ versehen sein. Die Flanken der Rillen und die der benachbarten Wulste sollten in einer gemeinsamen Tangente an die jeweiligen Rundungen anschließen. Um eine optimale Zugfestigkeit zu erreichen, darf der Schaftdurchmesser des Verbindungselementes im Klemmbereich $L_K$ in keinem Falle kleiner werden als der Walzdurchmesser $d_f$ des entsprechenden Gewindes. Lediglich der Kerndurchmesser der Rillen des Dehnabschnittes und der Kerndurchmesser des Gewindes selbst unterschreiten diesen Walzdurchmesser. Die rechnerisch bestimmten Flankendurchmesser von Gewindabschnitt und Dehnabschnitt liegen ebenfalls in der Regel geringfügig unter dem entsprechenden Walzdurchmesser. Alle sonstigen Übergänge und auch der Radius unter dem Kopf im Fall einer Paß-Dehnschraube sind mit den in der heutigen Schraubenfertigung üblichen Radien und Übergängen zu versehen. So sollte z. B. der Übergang zwischen dem Schaft und dem Kopf keine größere Formzahl $\alpha_k$ als 5 aufweisen.

Die Wulste des Dehnabschnitts können nach dem Walzvorgang durch Schleifen oder Schäften auf das Paßmaß abgearbeitet sein, wobei natürlich der Flankendurchmesser des Dehnabschnittes nicht unterschritten werden darf. Der Dehnabschnitt kann aus einer Mehrzahl umlaufender Wulste und Rillen oder aus einem ein- oder mehrgängigen Paßgewinde bestehen. Die Wulste und Rillen bzw. das Paßgewinde des Dehnabschnittes sowie das Gewinde des Gewindeabschnitts können vor oder nach dem Vergüten auf die Walzdurchmesser $d_f$ bzw. $d_{fR}$ aufgebracht werden.

EP 0 206 190 B1

Die Rundung der Rillen des Dehnabschnitts können im Längsschnitt des Verbindungselements gesehen einen Radius oder ein logarithmisches Profil aufweisen und im Grunde in eine Gerade auslaufen, deren Länge 0,017 x Kerndurchmesser des Dehnabschnitts nicht überschreitet.

Die Erfindung wird anhand eines bevorzugten Ausführungsbeispieles weiter beschrieben. Es zeigen:

Figur 1   eine Ansicht des Verbindungselementes in Form einer Paß-Dehnschraube,
Figur 2   eine Detaildarstellung aus dem Dehnabschnitt,
Figur 3   eine Ausführungsmöglichkeit der Rundung der Rille im Dehnabschnitt,
Figur 4   ein konkretes Ausführungsbeispiel einer Pleuelschraube und
Figur 5   ein weiteres konkretes Ausführungsbeispiel einer Pleuelschraube.

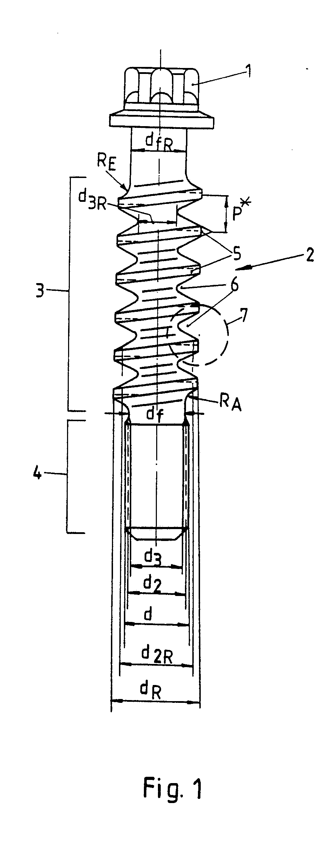

Die in Figur 1 dargestellte Paß-Dehnschraube weist einen Kopf 1 und einen Schaft 2 auf. Der Schaft 2 besitzt einen Dehnabschnitt 3 und einen Gewindeabschnitt 4. Der Gewindeabschnitt 4 ist in der Regel an dem dem Kopf 1 abgekehrten Ende des Schaftes 2 angeordnet, während der Dehnabschnitt 3 zwischen Kopf und Gewindeabschnitt 4 vorgesehen ist. Der Dehnabschnitt 3 muß nicht unbedingt über die gesamte restliche Länge des Schaftes 2 sich erstrecken.

Der Dehnabschnitt 3 besitzt Wulste 5 und Rillen 6. Die Wulste 5 sind hier als Erhebungen eines eingängigen Gewindes ausgebildet, während die Rillen 6 die entsprechenden Vertiefungen darstellen. Es versteht sich, daß auch eine mehrgängige Gewindeausbildung oder auch umlaufende Wulste und Rillen vorgesehen sein können. Der Dehnabschnitt 3 wird durch mindestens zwei Wulste und eine Rille gebildet. Im Dehnabschnitt 3 ergibt sich durch die Anordnung der Rillen 6 ein Kerndurchmesser $d_{3R}$. Der Außendurchmesser $d_R$ wird durch die Wulste 5 gebildet. Der Flankendurchmesser $d_{2R}$ im Dehnabschnitt ergibt sich nach der angegebenen Formel. Im Gewindeabschnitt 4 ist die Bemessung in üblicher Weise ausgebildet, also mit dem Kerndurchmesser $d_3$, dem Flankendurchmesser $d_2$ und dem Außendurchmesser d. Der Schaft 2 wird durch Gewindewalzen bzw. -rollen umgeformt. Der Walzdurchmesser des Rohlings ist mit $d_f$ für den Gewindeabschnitt 4 und mit $d_{fR}$ für den Dehnabschnitt 3 bezeichnet, wobei diese Ausgangsdurchmesser des Rohlings gleich sein können. Man erkennt, daß der Flankendurchmesser $d_2$ des Gewindeabschnitts 4 kleiner als der Flankendurchmesser $d_{2R}$ des Dehnabschnittes 3 ist. Die Walzdurchmesser der Abschnitte 3 und 4 können auch unterschiedlich bereitgestellt werden ($d_f \neq d_{fR}$). Der Dehnabschnitt besitzt die Teilung P*. Die Radien $R_A$ und $R_E$ am Anfang und Ende der Wulst 5 sind mit der für die jeweilige dynamische Beanspruchung günstigsten Form gewählt.

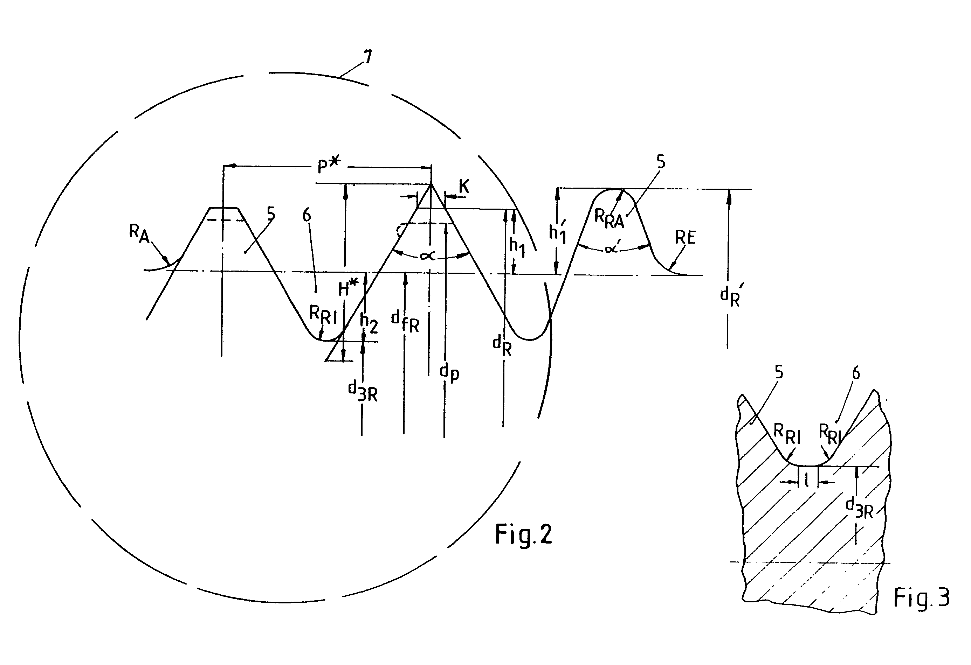

Figur 2 zeigt einen Ausschnitt 7 gemäß der Kreisangabe in Figur 1. Es sind zwei Wulste 5 dargestellt, die durch Schleifen oder Schäften auf den Paßdurchmesser $d_p$ abgearbeitet sind. Durch die Höhen $h_1$ bzw. $h_2$ wird das Profil gegenüber dem Walzdurchmesser $d_f$ begrenzt. Es ist auch möglich, wie an dem weiteren Wulst 5 dargestellt, daß das Walzprofil an dem Wulst 5 außen auch einen Radius $R_{RA}$ aufweisen kann. Ausgehend vom gleichen Walzdurchmesser df erhält man durch einen anderen Flankenwinkel $\alpha'$ einen größeren Rillenaußendurchmesser $d_R'$. Dieser Durchmesser kann ebenfalls als Paßdurchmesser dienen. Die Kammbreite K ergibt sich automatisch bei dem abgeflachten Profil aus der Teilung P* und dem Flankenwinkel $\alpha$ sowie der Höhe $h_1$, die in der Regel ⅔ der Gesamthöhe H ausmacht. Durch ein Herunterarbeiten auf den Durchmesser $d_p$ vergrößert sich die Kammbreite K entsprechend dem Strahlensatz.

Der Grund der Rillen im Dehnabschnitt 3 kann verschieden ausgeführt werden. Figur 2 zeigt einen Radius $R_{RI}$, der tangential in die Flanke des Flankenwinkels $\alpha$ übergeht. Anstelle des Radius kann auch ein logarithmisches Profil vorgesehen sein. Es ist aber auch möglich, wie Figur 3 zeigt, zwischen zwei Radien $R_{RI}$ ein gerades Stück vorzusehen, welches also parallel zu der Achse des Verbindungselementes verläuft. Dieser Grund der Rille darf zwischen den beiden Radien maximal auf einer Länge von $1 = 0,017 \cdot d_{3R}$ verlaufen.

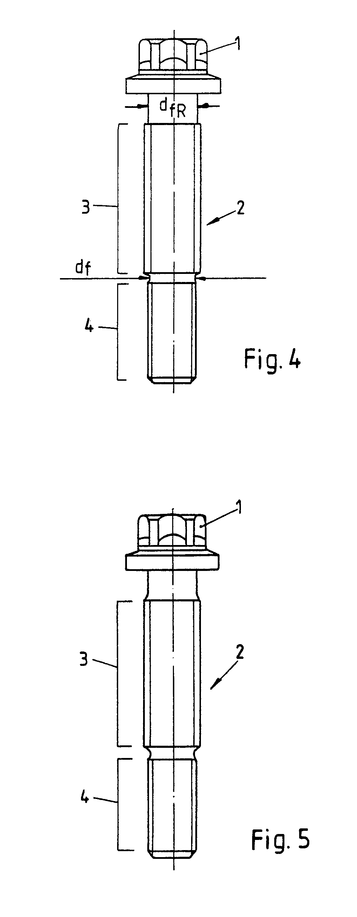

In den Figuren 4 und 5 sind noch zwei konkrete Ausführungsbeispiele dargestellt:
Beispiel I: Verbindungselement Pleuelschraube nach Figur 4
          Dehnabschnitt wahlweise vor oder nach dem Vergüten gerollt
          Gewindeabschnitte (in diesem Falle, weil Pleuelschraube) M 7-4 g nach dem Vergüten gerollt
          maß-liche Gegenüberstellung beider geometrischer Formen:

4

| | | | Gewindeabschnitt mit Gewinde M7-4 g (max) | | Dehnabschnitt mit Paßgewinde |
|---|---|---|---|---|---|
| Außen- bzw. Nenndurchmesser | mm | $d$ | 6,75 - 6,9 | $d_R$ | 7,7 - 0,2 (vor dem Schleifen) |
| Paßdurchmesser | mm | $d_p$ | | $d_p$ | 7,4 - 0,1 (nach d. Schleifen) |
| Steigung | mm | $P$ | 1 | $P^*$ | 1,75 |
| Flankendurchmesser | mm | $d_2$ | 6,32 | $d_{2R}$ | 6,65 |
| Kerndurchmesser | mm | $d_3$ | 5,75 | $d_{3R}$ | 5,6 - 0,1 |
| Walzdurchmesser | mm | $d_f$ | 6,27 | $d_{fR}$ | 6,60 - 6,65 |
| Rundung | mm | $R$ | 0,144 | $R_{RI}$ | 0,32 - 0,1 |
| Profiltiefe | mm | $H$ | 0,866 | $H^*$ | 1,52 |
| Kammbreite | mm | $K$ | | $K$ | 0,2 + 0,15 |
| Spannungsquerschnitt | mm² | $A_S$ | 28,9 | $A_{SR}$ | 29,21 |
| Flankenwinkel | ° | $\alpha$ | 60 | $\alpha$ | $60 \pm 2$ |

Für das Gewinde wurde auf Toleranzangaben verzichtet; es wurden lediglich Nennmaße angegeben. Die Toleranzen sind DIN 13 zu entnehmen. Für den Dehnabschnitt wurden die wichtigsten Toleranzen angegeben.

Beispiel II: Verbindungselement Pleuelschraube nach Figur 5
Dehnabschnitt wahlweise vor oder nach dem Vergüten gerollt
Gewindeabschnitt (in diesem Falle, weil Pleuelschraube) M 8 x 1 -4g nach dem Vergüten gerollt.
Maßliche Gegenüberstellung beider geometrischer Formen:

| | | | Gewindeabschnitt mit Gewinde M 8-4 g (max) | | Dehnabschnitt mit Paßgewinde |
|---|---|---|---|---|---|
| Außen- bzw. Nenndurchmesser | mm | $d$ | 7,75 - 7,9 | $d_R$ | 8,8 - 0,2 |
| Paßdurchmesser | mm | $d_p$ | | $d_p$ | 8,5 - 0,02 |
| Steigung | mm | $P$ | 1 | $P^*$ | 1,75 - 2Gg (2. Gang) |
| Flankendurchmesser | mm | $d_2$ | 7,32 | $d_{2R}$ | 7,65 |
| Kerndurchmesser | mm | $d_3$ | 6,75 | $d_{3R}$ | 6,6 - 0,1 |
| Walzdurchmesser | mm | $d_f$ | 7,30 | $d_{fR}$ | 7,58 - 7,64 |
| Rundung | mm | $R$ | 0,18 | $R_{RI}$ | 0,3 - 0,1 |
| Profiltiefe | mm | $H$ | 0,866 | $H^*$ | 1,52 |
| Kammbreite | mm | $K$ | | $K$ | 0,3 $\pm$ 0,1 (nach dem Schleifen) |
| Spannungsquerschnitt | mm² | $A_S$ | 39,2 | $A_{SR}$ | 39,57 |
| Flankenwinkel | ° | | 60 | | $60 \pm 2$ |

Für das Gewinde wurde auf Toleranzangaben verzichtet; es wurden lediglich Nennmaße angegeben. Die Toleranzen sind DIN 13 zu entnehmen. Für den Dehnabschnitt wurden die wichtigsten Toleranzen angegeben.

**Bezugszeichenliste**

1 = Kopf
2 = Schaft
3 = Dehnabschnitt
4 = Gewindeabschnitt
5 = Wulst
6 = Rille
7 = Ausschnitt

**Patentansprüche**

1. Verbindungselement für zwei Maschinen- oder Bauteile, insbesondere Paß-Dehnschraube, Paß-Gewindeschraube o. dgl., mit einem der Befestigung dienenden Gewindeabschnitt und einem dazu axial versetzt angeordneten Dehnabschnitt aus mehreren Wulsten und Rillen, wobei der Kerndurchmesser der Rillen des Dehnabschnitts kleiner als der Kerndurchmesser des Gewindeabschnitts ausgebildet ist, dadurch gekennzeichnet, daß der Kerndurchmesser $d_{3R}$ der Rillen (6) des Dehnabschnittes (3) zwischen 80 % und < 1 des Kerndurchmessers $d_3$ des Gewindeabschnittes (4) beträgt und daß der Flankendurchmesser $d_{2R}$ des Dehnabschnittes (3) aus den Wulsten (5) und Rillen (6) größer oder gleich dem Flankendurchmesser $d_2$ des Gewindeabschnittes (4) ausgebildet ist.

2. Verbindungselement nach Anspruch 1, dadurch gekennzeichnet, daß der Flankendurchmesser $d_{2R}$ des Dehnabschnittes (3) entsprechend dem Kerndurchmesser $d_{3R}$, des Dehnabschnittes (3), der Teilung P* bzw. Steigung der Wulste (5) und dem Flankenwinkel $\alpha$ entsprechend der Formel

$$d_{2R} = D_{3R} + \frac{2}{3} \cdot \frac{P*}{2 \tan \frac{\alpha}{2}}$$

festgelegt ist.

3. Verbindungselement nach Anspruch 1 und 2, dadurch gekennzeichnet, daß der Außendurchmesser $d_R$ der Wulste (5) des Dehnabschnittes (3) größer als der Außendurchmesser d des Gewindeabschnittes (4) ausgebildet ist, insbesondere in einem Bereich zwischen dem 1,0 bis 1,2fachen des Außendurchmessers d des Gewindeabschnittes (4).

4. Verbindungselement nach Anspruch 1 bis 3, dadurch gekennzeichnet, daß die Rundung der Rillen (6) des Dehnabschnittes (3) gleich oder größer als die Rundung der Rillen des Gewindeabschnitt ist.

5. Verbindungselement nach Anspruch 3, dadurch gekennzeichnet, daß die Wulste (5) des Dehnabschnittes (3) durch Schleifen, Drehen oder Schäften auf das Paßmaß abgearbeitet wird.

6. Verbindungselement nach Anspruch 1, dadurch gekennzeichnet, daß der Dehnabschnitt (3) aus einer Mehrzahl umlaufender Wulste (5) und Rillen (6) oder einem ein- oder mehrgängigen Paßgewinde (5, 6) besteht.

7. Verbindungselement nach Anspruch 4, dadurch gekennzeichnet, daß die Rundung der Rillen (6) des Dehnabschnitts (3) im Längsschnitt des Verbindungselements gesehen einen Radius $R_{RI}$ oder ein logarithmisches Profil aufweist und in Grund in eine Gerade ausläuft, deren Länge 0,017 · Kerndurchmesser $d_{3R}$ des Dehnabschnittes (3) nicht überschreitet.

## Claims

1. Connecting element for two machine parts or structural parts, in particular a fitted expanding screw, fitted threaded screw or the like, having a threaded section serving for fixing and an expanding section arranged axially offset thereto and comprising a plurality of beads and grooves, the core diameter of the grooves of the expanding section being designed smaller than the core diameter of the threaded section, characterized in that the core diameter $d_{3R}$ of the grooves (6) of the expanding section (3) is between 80 % and < 1 of the core diameter $d_3$ of the threaded section (4) and in that the effective diameter $d_{2R}$ of the expanding section (3) comprising the beads (5) and grooves (6) is designed greater than or equal to the effective diameter $d_2$ of the threaded section (4).

2. Connecting element sccording to Claim 1, characterized in that the effective diameter $d_{2R}$ of the expanding section (3) is fixed according to the core diameter $d_{3R}$ of the expanding section (3), of the pitch P* or lead of the beads (5) and the included angle $\alpha$, according to the formula

$$d_{2R} = d_{3R} + \text{FIGUR}$$

3. Connecting element according to Claims 1 and 2, characterized in that the outside diameter $d_R$ of the beads (5) of the expanding section (3) is designed greater than the outside diameter d of the threaded section (4), in particular in a range between 1.0 to 1.2 times the outside diameter d of the threaded section (4).

4. Connecting element according to Claims 1 to 3, characterized in that the rounding of the grooves (6) of the expanding section (3) is equal to or greater than the rounding of the grooves of the threaded section.

5. Connecting element according to claim 3, characterized in that the beads (5) of the expanding section (3) are worked off to the fitting dimension by grinding, turning or scarfing.

6. Connecting element according to claim 1, characterized in that the expanding section (3) consists of a multiplicity of encircling beads (5) and grooves (6) or of a single-start or multi-start fitted thread (5, 6).

7. Connecting element according to claim 4, characterized in that the rounding of the grooves (6) of the expanding section (3) has, seen in longitudinal section of the connecting element, a radius $R_{RI}$ or a logarithmic profile and runs out in the root into a straight line, the length of which does not exceed 0.017 x core diameter $d_{3R}$ of the expanding section (3).

## Revendications

1. Raccord pour deux pièces de machine ou deux éléments de construction, en particulier boulon extensible ajuté, vis filetée ajustée ou analogue, avec une partie filetée servant à la fixation et une partie extensible décalée axialement par rapport à celle-ci, composée de plusierus filets et de plusieurs gorges, le diamètre de lâme des gorges de la partie extensible étant plus petit que celui de l'âme de la partie filetée,

caractérisé en ce que le diamètre $d_{3R}$ de l'âme des gorges (6) de la partie extensible (3) est compris entre 80 % et < 1 du diamètre $d_3$ de l'âme de la partie filetée (4) et en ce que le diamètre $d_{2R}$ des flancs de la partie extensible (3) depuis les filets (2) et les gorges (6) est plus grand que, ou égal au diamètre $d_2$ des flancs de la partie filetée (4).

2. Raccord selon la revendication 1, caractérisé en ce que le diamètre $d_{2R}$ des flancs de la partie extensible (3) est fixé en fonction du diamètre $d_{3R}$ de l'âme de la partie extensible (3), du pas $P^*$ des filets (5) et de l'angle des flancs, d'après la formule:

$$d_{2R} = d_{3R} + \frac{2}{3} \cdot \frac{P^*}{2 \tan \frac{\alpha}{2}}$$

3. Raccord selon les revendications 1 et 2, caractérisé en ce que le diamètre extérieur $d_R$ des filets (5) de la partie extensible (3) est plus grand que le diamètre extérieur d de la partie filetée (4), en particulier dans une gamme entre 1,0 fois et 1,2 fois le diamètre extérieur d de la partie filetée (4).

4. Raccord selon les revendications 1 à 3, caractérisé en ce que l'arrondi des gorges (6) de la partie extensible (3) est égal à, ou plus grand que, l'arrondi des gorges la partie filetée (4).

5. Raccord selon la revendication 3, caractérisé en ce que les filets (5) de la partie extensible (3) sont ajustés à la cote par meulage, par tournage ou par shaving.

6. Raccord selon la revendication 1, caractérisé en ce que la partie extensible (3) se compose d'une pluralité de filets (5) et de gorges (6) périphériques ou d'un filetage (5, 6) simple ou multiple.

7. Raccord selon la revendication 4, caractérisé en ce que l'arrondi des gorges (6) de la partie extensible (3), le raccord étant vu en coupe longitudinale, présente un rayon $R_{RI}$ ou bien un profil logarithmique et se termine au fond par une droite dont la longueur ne dépasse pas 0,017 x le diamètre $d_{3R}$ de l'âme de la partie extensible (3).

Fig. 1

7

P*

K

5

R_A

5

6

R_RA

RE

H*

α

h_1

h'_1

α'

R_Rl

h_2

d_fR

d_R'

d_3R

d_p

d_R

Fig.2

5

6

R_Rl

R_Rl

l

d_3R

Fig.3

Fig. 4

Fig. 5